Europäisches Patentamt

European Patent Office

Office européen des brevets

(19)

(11) Numéro de publication: **0 385 897**
**A1**

# (12) DEMANDE DE BREVET EUROPEEN

(21) Numéro de dépôt: 90430005.0

(22) Date de dépôt: 23.02.90

(51) Int. Cl.5: **G01H 3/12, G10K 11/30**

(30) Priorité: 28.02.89 FR 8902744

(43) Date de publication de la demande:
05.09.90 Bulletin 90/36

(84) Etats contractants désignés:
AT BE CH DE DK ES FR GB GR IT LI LU NL SE

(71) Demandeur: **CENTRE NATIONAL DE LA RECHERCHE SCIENTIFIQUE (CNRS)**
**15, Quai Anatole France**
**F-75700 Paris(FR)**

(72) Inventeur: **Saurel, Jean-Marc**
**197 rue des Chênes Verts**
**F-34960 Clapiers(FR)**
Inventeur: **Attal, Jacques**
**1677 Chemin du Pioch de Baillos**
**F-34980 Montferriez/Lez(FR)**

(74) Mandataire: **Moretti, René et al**
**c/o Cabinet BEAU DE LOMENIE**
**"Prado-Mermoz" 232, Avenue du Prado**
**F-13008 Marseille(FR)**

(54) **Sonde microéchographique de collimation à ultrasons à travers une surface déformable.**

(57) La présente invention a pour objet une sonde microéchographique de collimation à ultrasons à travers une surface déformable.

La sonde comporte à une extrémité un transducteur (4) de faisceau d'ondes (5) ultrasoniques, disposé par exemple en calotte sphérique, de telle façon que ledit faisceau converge en un foyer (A), lequel foyer est également celui de l'autre extrémité du corps (1) monolithique et qui est la pointe de contact (6), de telle façon que le faisceau (7) qui pénètre dans le corps à analyser (3) est collimaté.

Les ondes ultrasoniques (5) sont de préférence d'une fréquence égale à au moins 50 MHZ.

## Sonde microéchographique de collimation à ultrasons à travers une surface déformable.

La présente invention a pour objet sonde microéchographique de collimation à ultrasons à travers une surface déformable.

Le secteur technique de l'invention est celui de la fabrication des sondes d'appareils échographiques, d'analyse en profondeur et sans destruction d'objets.

Une des applications de l'invention est l'analyse microéchographique des matériaux à surface déformable ou plastique, tels que les tissus ou organes proches de la peau ou accessibles par voie endoscopique chez l'homme ou les animaux supérieurs, de même chez les insectes, et dans le domaine végétal.

On connaît en effet différents types de sondes comportant un émetteur d'ultrasons, dont le faisceau est orienté en direction du matériau à analyser. Afin d'obtenir des interprétation correctes, avec une bonne résolution latérale par analyse de la partie du faisceau réfléchi vers la sondesur toute interface interne à repérer, il est nécessaire d'avoir, d'une part, un faisceau incident convergent ou parallèle (c'est-à-dire collimaté) le plus étroit possible à partir d'une source la plus puissante possible et, d'autre part, pénétrant dans le matériau sans avoir été affaibli par des réflexions et des absorptions parasites.

En effet, il est connu que les ondes ultrasoniques, et cela d'autant plus que leur fréquence est élevée, sont d'une part réfléchies par toute surface intermédiaire et, d'autre part, très rapidement absorbées dans les gaz comme par exemple dans l'air. Par contre, elles se propagent très bien dans du liquide comme dans l'eau.

Ainsi, pour répondre partiellement à ces deux impératifs, toutes les sondes existantes comportent, entre l'émetteur et la surface du matériau à analyser, d'une part, des moyens en général sous forme de lentille comme en optique, mais créant alors autant de surfaces intermédiaires à réflexion parasite pour assurer et contrôler la convergence ou la collimation du faisceau le plus étroit possible à partir d'une source la plus grande et, d'autre part, des volumes pleins ou remplis ou arrosés d'eau ou de gel assurant la continuité de propagation des ondes.

Les deux domaines principaux d'applications de ces matériels échographes sont l'analyse d'objets, tels que les organes et les peaux dans le domaine médical, et des végétaux en agroalimentaires puisque ceux-ci, étant composés en majeure parti d'eau, se prêtent bien à la pénétration des ondes acoustiques, qui sont par ailleurs indolores et à priori inoffensives, et le contrôle non destructif de matériaux dans le domaine mécanique essentiellement pour les objets d'origine métalliques dans lesquels les ondes acoustiques pénètrent bien également.

Les sondes utilisées à ce jour ont fait l'objet d'un certain nombre de dépôts de brevets : on connaît en particulier les brevets U.S. 400.547 et 551, déposés le 21 Juillet 1982 et étendus à l'EUROPE le 07 Mars 1984 sous le No. de Publication 0 102 179 par TECHNICARE CORPORATION, intitulé "selectable focus ultrasonic transducers for diagnostic imaging" et décrivant un émetteur concave ayant une double courbure de focalisation directement dans un liquide tampon de transmission. On connaît également le brevet européen 0 33.751 publié le 19 Août 1981 par la Société HITACHI intitulé "Ultrasonic transducers using ultra high frequency" et revendiquant une longueur de la sonde égale à une fraction entière 1/N de la longueur de Fresnel. Enfin, on peut citer le brevet U.S. déposé le 06 Août 1973 sous le NO. 385.893 par la Société GENERAL ELECTRIC Company, intitulé "Apparatus for focusing and collimating ultrasonic waves" et décrivant une sonde comportant une ou plusieurs lentilles remplies d'un côté de gel ou de liquide, et de l'autre côté constituées par un matériau assurant la transmission jusqu'au contact avec l'objet.

La plupart des sondes échographiques existantes utilisent des fréquences de 10 à 15 MHz maximum, ce qui permet, d'une part, d'éviter une trop grande réflexion sur les surfaces de lentilles intermédiaires, et des absorbtions parasites en cas de présence d'espace absorbant comme l'air, entre la pointe de la sonde et la surface à pénétrer, car cette absorbtion est fonction du carré de la fréquence, et d'autre part, de pénétrer dans le matériau jusqu'à une profondeur de 4 à 5 cm; une onde de fréquence de 5 MHz pénètre de même par exemple jusqu'à 20 cm.

Cependant, à l'inverse, la résolution en profondeur est limitée par la longueur d'ondes, ce qui pour des fréquences basses, ne permet pas de détecter les petits défauts éventuels, tandis que la résolution latérale est liée à la largeur du faisceau qui lui, est fonction des qualités de convergence de la sonde.

Ainsi si les équipements actuels permettent d'analyser les matériaux en profondeur de plusieurs centimètres, avec même parfois des réglages de distance de focalisation du faisceau pour améliorer la détection d'échos à différentes profondeurs, aucun équipement ne permet d'augmenter la fréquence afin de réaliser l'analyse des matériaux à très faible profondeur, de quelques millimètres au plus, sous leur surface avec une très bonne résolution, tant en profondeur qu'en latéral.

Le problème posé est de pouvoir effectuer des analyses de microéchographie essentiellement au travers de surfaces déformables, en évitant le maximum de surfaces intermédiaires entre l'émetteur acoustique et cette surface et en concentrant le faisceau à son extrémité sans aberration afin d'obtenir des images d'analyse les plus précises possibles.

Une solution au problème posé est une sonde microéchographique de collimation à ultrasons à travers une surface déformable, comportant à une extrémité un transducteur de faisceaux d'ondes ultrasoniques et à l'autre extrémité une pointe convexe de contact avec ladite surface, caractérisée en ce que lesdites ondes ultrasoniques sont d'une fréquence égale à au moins 20 MHz et que ledit transducteur est disposé directement sur une pièce en matériau, de préférence isotrope peu absorbant, laquelle pièce est continue jusqu'à ladite pointe de contact usinée directement dans celle-ci, de telle façon que lesdites ondes convergent directement depuis ledit transducteur, ayant toute disposition particulière pour cela vers un foyer qui coïncide au mieux avec celui de ladite pointe de contact, déterminé par la nature dudit matériau, celle de ladite surface de contact et la fréquence des ondes émises.

Dans un mode de réalisation particulier, ledit transducteur n'est disposé sous forme de calotte sphérique usinée directement dans ladite pièce en matériau isotrope.

Dans un autre mode de réalisation particulière, ledit transducteur est disposé sur une surface plane, usinée directement dans ladite pièce en matériau isotrope, de telle façon qu'elle constitue une lentille constituée d'anneaux concentriques d'espacement régulier, alimentés avec des signaux de phases différentes.

Le résultat est nouvelle sonde microéchographique de collimation à ultrasons à travers une surface déformable.

Cette sonde suivant l'invention offre de nombreux avantages par rapport aux sondes connues à ce jour, essentiellement du fait de la possibilité offerte d'émettre des ondes à très hautes fréquences jusqu'à 1 gigaherz et au delà si nécessaire, permettant alors de détecter, grâce à la haute résolution obtenue, de très petites discontinuités immédiatement en dessous à quelques millimètres et même moins de la surface sur laquelle on pose la sonde. Cette sonde permet d'assurer la continuité de l'échographie traditionnelle, vers le domaine des hautes fréquences, au-dessus des 10 MHz généralement utilisés.

D'autre part, du fait de la moindre perte par réflexion à l'intérieur de la sonde, puisque celle-ci n'a aucune interface interne, associé à la collimation très étroite du faisceau et au contact direct de l'extrémité de la sonde contre la surface déformable qui épouse alors la forme de cette extrémité, on obtient un excellent rendement acoustique permettant de conserver le maximum d'énergie acoustique pour pénétrer des milieux particulièrement absorbants, d'avoir des images sans bruits de fond parasite et d'obtenir une meilleure reconnaissance de forme.

La sonde suivant l'invention est très simple, ne comporte pas de lentilles et de matériau de différentes natures séparant ces lentilles. Sa fabrication monolitique avec une seule pièce de focalisation et son utilisation en sont facilitées. De plus, du fait des faibles profondeurs de pénétration, il n'y a pas de besoin de mise au point de la convergence.

Il est possible également par balayage électronique suivant une réalisation particulière, de créer des images d'analyse sans déplacement de la sonde.

Les applications possibles de l'invention sont nombreuses puisqu'elles concernent tous les matériaux déformables ou plastiques, soit essentiellement dans le domaine biomédical, pour l'analyse des tissus et des organes près de la peau ou accessibles par voie endoscopique.

D'autres applications sont aussi très intéressantes dans le domaine agroalimentaire comme par exemple pour tester l'adhérence des peaux des fruits et des légumes sur la chair de ceux-ci comme pour les tomates.

On peut citer également l'intérêt de ces sondes pour les tests de matière dont la peau est caoutchoutée. On pourrait utiliser aussi ces sondes pour les tests de matériaux durs comme en mécanique, mais il est nécessaire alors de rajouter un liquide ou gel de couplage entre la pointe de la sonde et la surface du matériau comme cela se fait à ce jour avec d'autres sondes et ce liquide de couplage détruisant une grande partie des avantages cités ci-dessus, atténue l'intérêt de cette sonde pour cet usage pour lequel il faudrait diminuer les fréquences des ondes émises, n'apportant alors que peu d'améliorations par rapport aux sondes existantes.

La description suivant se réfère aux dessins annexés sans aucun caractère limitatif, décrivant des exemples de réalisation de sondes microéchographiques à ultrasons suivant l'invention, mais d'autres réalisations peuvent être envisagées.

La figure 1 est une vue en coupe longitudinale de la sonde suivant l'invention avec un transducteur en calotte sphérique.

La figure 2 est une autre vue en coupe d'une sonde avec un transducteur en demi calotte sphérique.

La figure 3 est une vue en coupe d'une sonde avec un transducteur plan disposé en anneaux concentriques.

La figure 4 est une vue en coupe d'une sonde à faisceau dévié d'un angle déterminé.

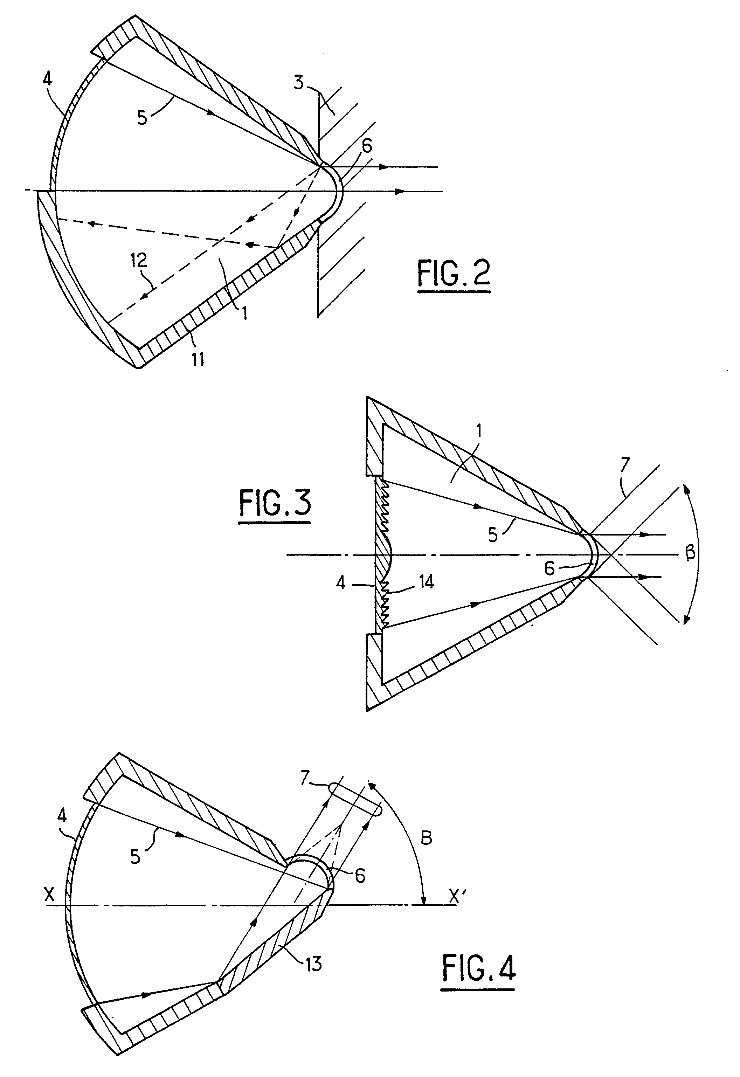

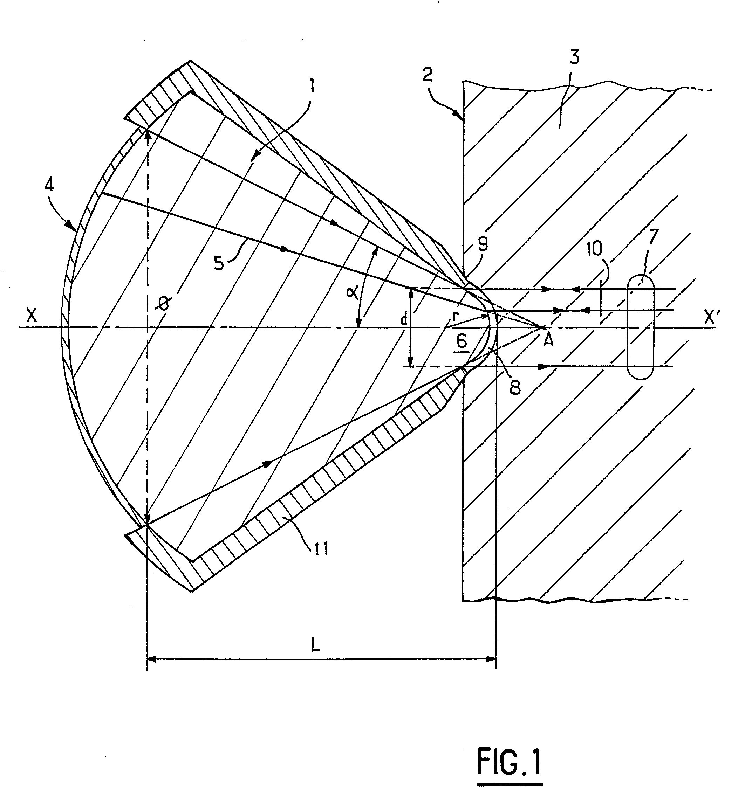

La figure 1 est une vue en coupe longitudinale de la sonde suivant l'invention par tout plan passant par son axe XX', la forme du corps principal 1 étant de type conique. Cette sonde est figurée appuyée contre une surface déformable 2 d'un corps ou d'un objet quelconque 3 dont on veut analyser les caractéristiques des quelques millimètres situés juste sous cette surface.

Cette sonde comporte à une extrémité, sur la base la plus grande du cône du corps principal, un transducteur 4 de faisceaux d'ondes ultrasoniques 5 de tout type connu et placé directement sur ledit corps principal 1, de telle façon que les ondes 5 pénètrent sans interface celui-ci.

Ce corps principal est une pièce unique 1 monolithique en matériau, de préférence isotrope et peu absorbant de type silice fondue.

Ledit transducteur 4 et la base du corps principal qui le reçoit sont disposés de telle façon que les ondes 5 émises convergent vers un point foyer A. En particulier, ladite base peut être une calotte sphérique usinée directement dans le corps principal 1 de centre A, puisque le transducteur 4 étant contre le matériau 1, il n'y a pas d'aberrations, mais peut être également d'une autre forme telle que décrit dans la figure 3.

La fréquence des ondes est d'au moins 20 MHz pour obtenir une bonne résolution en profondeur dans l'objet 3, mais dans une réalisation préférentielle, lesdites ondes ultrasoniques sont d'une fréquence égale à au moins 50 MHz.

Afin d'obtenir une bonne concentration d'énergie acoustique pour une dimension donnée longitudinale de la sonde suivant l'axe XX', le demi-secteur angulaire α de ladite calotte sphérique, dans une réalisation particulière, est de 50° environ.

L'autre extrémité de la sonde, qui est la base la plus petite du corps principal 1 est une pointe convexe 6 usinée directement dans la pièce de matériau constituant ce corps principal 1, et qui est appelée pointe de contact avec la surface 2 déformable.

Cette pointe 6 est à une distance "L" du transducteur telle que les ondes 5 sont stabilisées et cohérentes, soit de préférence au delà de la distance déterminant la zone de Fresnel, c'est-à-dire :

$$L > \frac{\phi^2}{l} \times f$$

où ∅ est le diamètre du transducteur 4, l la longueur d'ondes des ondes 5 dans le matériau 1 de la sonde et f un facteur lié à la courbure de la calotte sphérique du transducteur 4 et qui diminue avec celle-ci.

L'ouverture d efficace de la pointe de contact 6 est de préférence au plus égale à trois fois la longueur d'ondes desdites ondes 5 ultrasoniques, ceci afin d'améliorer la résolution latérale de l'analyse que permet cesdites ondes.

On détermine alors la courbure de la pointe 6 de contact et sa distance L au transducteur, de telle façon que son foyer correspondant au changement de milieu et du matériau 1 vers l'objet 3 coïncide avec le foyer A des transducteurs 4; pour cela, on utilise les formules connues de dioptre sphérique qui donne la distance F de ce foyer par rapport au centre de la courbure de la pointe 6 :

$$F = \frac{r}{1 - \frac{V_2}{V_1}}$$

où r = rayon de courbure de la pointe 6
$v_1$ = vitesse de transmission des ondes 5 dans le matériau du corps principal 1.
$v_2$ = vitesse de transmission des ondes dans l'objet 3.

Par suite du changement de milieu entre la sonde et l'objet, ce dernier ayant une vitesse inférieure, le dioptre de la pointe 6 se comporte en lentille divergente permettant d'obtenir un faisceau acoustique 7 quasi parallèle de diamètre fonction de l'ouverture d de la pointe 6. Plus le dioptre de la pointe 6 est proche du foyer A, plus le faisceau 7 est étroit; on peut ainsi ajuster le volume de la zone irradiée dans l'objet en fonction des structures à révéler et de la fréquence utilisée.

Comme indiqué ci-dessus, quand l'ouverture d est choisie de préférence égale à quelques longueurs d'ondes desdites ondes 5 ultrasoniques, la détermination de la courbure de la pointe 6 et de sa distance L au transducteur qui s'en déduit, donne toujours, comme des mesures et des essais le démontrent, une distance "L" supérieure à la distance de la zone de Fresnel.

De même, le faisceau acoustique des ondes 5 émises par le transducteur 4 ne focalise pas exactement en un seul point A, mais en une tache de diffraction située au foyer A et dont le diamètre est :

$$t = \frac{1,22 \times l}{2 \times sin \; \alpha}$$

où l est la longueur d'onde des ondes 5 dans le matériau 1 de la sonde et α le demi secteur angulaire de la calotte sphérique du transducteur 4.

Si on fait le calcul pour la fréquence particulière de 50 MHz, un angle particulier α de 50°, et un matériau 1 en silice fondue, on trouve t = environ 100 μ soit l'équivalent de la longueur d'ondes l qui est alors de 120 μ : il n'est donc pas nécessaire de vouloir réduire le diamètre 7 du faisceau collimaté en rapprochant le dioptre de la pointe 6, du foyer A. Le mieux que l'on puisse obtenir est donc un faisceau de diamètre environ égal à la longueur d'ondes, ce qui donne une résolution en largeur égale à celle en profondeur, et cela demande d'usiner le dioptre de la partie 6 à un diamètre à peine supérieur à celui de la longueur d'onde L.

Dans des réalisations préférentielles, on prend, comme indiqué précédemment une ouverture d presque et au plus égale à trois fois cette longueur d'onde pour ne pas avoir trop de difficultés dans l'usinage de cette pointe 6 et tout en gardant une résolution intéressante en latéral bien supérieure à ce qui existe à ce jour, grâce à ce dispositif de sonde suivant l'invention.

Comme signalé en préambule, on sait que chaque surface d'interface entre deux matériaux différents réfléchit une partie des ondes qui lui parvient et donc affaiblit l'énergie du faisceau d'analyse : cette réflexion est d'autant plus importante que l'impédance acoustique de la surface est élevée. Cette réflexion a pour valeur :

$$I = (\frac{z2 - z1}{z2 + z1})^2$$

où z1 et z2 sont les coefficients de densité de chaque milieu = densité du matériau x par la vitesse de propagation du son dans ce matériau.

Dans notre figure z2 est celui de matériau de l'objet 3 et z1 celui du matériau 1 de la sonde et le dioptre de la pointe 6 se comporte d'autant plus comme un miroir que z1 est faible par rapport à z2 : aussi, pour atténuer ce pouvoir réflecteur, on recouvre d'une manière connue la surface extérieure du dioptre de la pointe 6 de contact une couche 8 d'un matériau dit d'adaptation dont l'épaisseur et le quart de la longueur d'onde l desdites ondes acoustiques 5, et dont l'impédance z3 est égal à :
$\sqrt{z1z2}$

Cette couche 8 dite aussi anti reflets, correspondant à une fréquence donnée peut être en plastique de type pellicule epoxy.

L'opérateur qui manoeuvrela sonde appuie donc celle-ci contre la surface 2 du corps à analyser 3, de telle façon que toute la partie du dioptre utile de la pointe de contact 6 recouverte éventuellement de cette couche 8 anti reflets, soit en contact continu avec ladite surface par déformation de celle-ci. Il y a alors continuité complète entre le corps principal 1 de la sonde et le corps de l'objet 3 pour le passage des ondes 5 qui sont alors collimatées en un faisceau palallèle 7 par le dioptre de la pointe 6 sans atténuation, diffraction et réflexion parasites au bord 9 de la pointe 6. Ce serait le cas si la surface n'était pas déformable ou si la sonde n'était pas assez appuyée contre celle-ci. Il y aurait alors un espace d'air en coin à épaisseur variable depuis le point de contact jusqu'au bord 9, toutes les ondes qui sortiraient du dioptre de la pointe 6 dans cet espace seraient alors très atténuées, réfléchies et diffractées dans une direction non parallèle à l'axe XX', elles seraient donc perdues pour la mesure et diminueraient d'autant la précision et la qualité de celle-ci.

Pour atténuer cet inconvénient en cas de risque si par exemple la surface est peu déformable ou dure, on peut combler cet espace éventuel d'une manière connue par du gel ou tout liquide faisant alors couche de continuité et d'adaptation.

L'interface créé par le dioptre de la pointe 6 malgré les précautions et les caractéristiques optimales du dispositif suivant l'invention peut renvoyer des ondes contre les parois latérales du corps principal 1 : si elles sont réfléchies de part leur temps de parcours, elles viennent perturber le transducteur 4 quand celui-ci reçoit en retour les ondes pénétrant l'objet 3 et réfléchies elles-mêmes par les surfaces internes 10 à analyser.

Pour éviter ce bruit, toute la surface latérale de la pièce du corps 1 est recouverte entre le transducteur 4 et la pointe de contact 6, par un matériau 11 absorbant acoustique. Cet absorbant acoustique peut avoir toute forme particulière et être constitué par exemple de résine epoxy chargée de tungstène.

La figure 2 est une autre vue en coupe d'une sonde suivant l'invention dans laquelle le transducteur 4 ne recouvre qu'une portion et de préférence, une moitié de la calotte sphérique du corps principal 1 qui peut avoir par ailleurs les mêmes caractéristiques que celui décrit dans la figure 1 avec une pointe de contact 6 appuyée contre l'objet 3 à analyser et un matériau absorbant 11 recouvrant tout le reste de la surface.

L'intérêt d'une telle disposition est que les ondes acoustiques 12 qui sont alors réfléchies par le dioptre de la pointe 6 ne sont renvoyées que vers la partie de la calotte sphérique du corps 1 qui ne supporte pas le transducteur 4. Cette disposition améliore encore la mesure et l'analyse possible par atténuation du bruit de fond.

La figure 3 est une vue en coupe d'une sonde dans laquelle le transducteur 4 est disposé sur la face du corps principal 1, dont la surface 14 est plane et comporte des anneaux concentriques d'espacement régulier, alimentés alors avec des signaux de phases différentes, de telle façon que les ondes acoustiques 5 émises convergent de la même façon que dans les figures 1 et 2 précédentes.

Ceci est possible quand ladite surface et ses anneaux réalisent une lentille de type de Fresnel ou de Soret, qui sont connus dans le domaine acoustique pour avoir les propriétés ci-dessus, suivant des caractéristiques tels que décrits par exemple dans le document "Ultrasonics Symposium" de 1986 page 745 et suivantes, écrit par Monsieur MAKOTO MINAHATA et Monsieur YAMADA & AII, du RESEARCH INSTITUTE OF ELECTRICAL COMMUNICATION à TOHOKU UNIVERSITY à SENDAI au JAPON.

C'est en fait le déphasage des signaux émis par chaque anneau qui, par annulation de certaines ondes alors en opposition de phase, privilégie l'émission des ondes en phase et donc amplifiées dans une direction donnée : en contrôlant par ailleurs par tout système de balayage électronique connu le déphasage des anneaux 14 qui eux-mêmes sont partagés alors en sections afin de constituer des émetteurs en matrice ou en ligne, on peut changer la direction de convergence du faisceau des ondes 5 et faire alors balayer le faisceau 7 collimaté dans un angle donné $\beta$.

La figure 4 est une vue en coupe d'une sonde dont la pièce du corps principal 1 de transmission comporte un réflecteur 13 acoustique plan disposé de telle façon que le faisceau acoustique 5 est dévié et passe ensuite au travers de la pointe de contact 6, laquelle pointe de contact fait un angle déterminé également B rapport à l'axe XX' de la sonde, c'est-à-dire du transducteur 4.

Le faisceau collimaté 7 fait alors le même angle B avec cet axe et permet d'utiliser ladite sonde pour faire des analyses d'angle comme par exemple en utilisation de contrôle dentaire.

Comme décrit dans les différentes figures, il est donc possible par légère pression de la pointe 6 sur l'objet, en mouillant éventuellement l'extrémité avec de l'eau ou du gel acoustique ou de tout autre liquide, si la surface est un peu dure ou/et poreuse ou avec des aspérités, d'insonifier l'objet et de récupérer les différents échos provenant des différentes interfaces internes à cet objet. Un dispositif électronique reçoit les échos reçus par le transducteur 4 et effectue d'une manière connue la séparation temporelle et la reconstitution en distance de ces différentes interfaces, et ceci d'autant plus facilement que le dispositif suivant l'invention élimine les bruits parasites.

Il n'y a pas à priori de limitation en fréquence des ondes 5, compte tenu de la quasi inexistance de liquide de couplage, et c est la seul absorption acoustique intrinsèque dans l'objet 3 à analyser et à examiner qui commande la pénétration maximale des ondes acoustiques.

La présente invention n'est pas limitée aux modes de réalisations décrits ci-dessus et qui ne constituent que des exemples de fabrication du dispositif suivant l'invention et des modifications et des variantes peuvent être apportées dans le cadre de celle-ci.

**Revendications**

1. Sonde microéchographique de collimation à ultrasons à travers une surface déformable (2), comportant à une extrémité un transducteur (4) de faisceaux d'ondes (5) ultrasoniques et à l'autre extrémité une pointe convexe (6) de contact avec ladite surface (2), caractérisée en ce que lesdites ondes ultrasoniques (5) sont d'une fréquence égale à au moins 20 MHz et que ledit transducteur (4) est disposé directement sur une pièce (1) en matériau, de préférence isotrope peu absorbant, laquelle pièce (1) est continue jusqu'à ladite pointe de contact (6) usinée directement dans celle-ci, de telle façon que lesdites ondes (5) convergent directement depuis ledit transducteur (4), ayant toute disposition particulière pour cela vers un foyer (A) qui coïncide au mieux avec celui de ladite pointe de contact (6), déterminé par la nature dudit matériau (1), celle de ladite surface de contact (2) et la fréquence des ondes émises (5).

2. Sonde microéchographique de collimation à ultrasons suivant la revendication 1, caractérisée en ce que lesdites ondes ultrasoniques (5) sont d'une fréquence égale à au moins 50 MHz.

3. Sonde microéchographique de collimation à ultrasons suivant l'une quelconque des revendications 1 et 2, caractérisée en ce que l'ouverture (d) de ladite pointe de contact (6) est au plus égale à trois fois la longueur d'onde desdites ondes ultrasoniques (5).

4. Sonde microéchographique de collimation à ultrasons suivant l'une quelconque des revendications 1 à 3, caractérisée en ce que ladite pièce (1) est recouverte sur toute sa surface entre le transducteur (4) et la pointe de contact (6) par un matériau (11) absorbant acoustique.

5. Sonde microéchographique de collimation à ultrasons suivant l'une quelconque des revendications 1 à 4, caractérisée en ce que ladite pointe de contact (6) est recouverte d'une couche (8) d'un matériau d'adaptation dont l'épaisseur est le quart de la longueur d'onde desdites ondes ultrasoniques (5).

6. Sonde microéchographique de collimation à ultrasons suivant l'une quelconque des revendications 1 à 5, caractérisée en ce que ladite pièce de transmission (1) comporte un réflecteur acoustique (13) plan disposé de telle façon que ledit faisceau des ondes acoustiques (5) est dévié au travers ladite pointe de contact (6), laquelle pointe de contact fait un angle déterminé $\alpha$ par rapport à l'axe de la sonde (XX').

7. Sonde microéchographique de collimation à ultrasons suivant l'une quelconque des revendications 1 à 6, caractérisée en ce que ledit transducteur (4) est disposé sous forme de calotte sphérique usinée directement dans ladite pièce (1) en matériau isotrope.

8. Sonde microéchographique de collimation à ultrasons suivant la revendication 7, caractérisé en ce que le demi secteur angulaire α de ladite calotte sphérique est de 50° environ.

9. Sonde microéchographique de collimation à ultrasons suivant l'une quelconque des revendications 7 et 8, caractérisée en ce que ledit transducteur (4) n'est disposé que sur une demi portion de ladite calotte sphérique.

10. Sonde microéchographique de collimation à ultrasons suivant l'une quelconque des revendications 1 à 6, caractérisée en ce que ledit transducteur (4) est disposé sur une surface plane, usinée directement dans ladite pièce (1) en matériau isotrope, de telle façon qu'elle constitue une lentille constituée d'anneaux concentriques (14) d'espacement régulier, alimentés avec des signaux de phases différentes.

FIG.2

FIG.3

FIG.4

FIG.1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4281550 (ERIKSON)<br>* colonne 3, lignes 44 - 62 *<br>* colonne 5, lignes 21 - 49; revendications 1, 14; figure 6 * | 1, 5, 7, 8 | G01H3/12<br>G10K11/30 |
| A | US-A-4084582 (NIGAM)<br>* colonne 4, lignes 38 - 41 *<br>* colonne 7, lignes 60 - 64 *<br>* colonne 6, lignes 1 - 27; figures 2, 5 * | 1, 6, 10 | |
| A | PATENT ABSTRACTS OF JAPAN<br>vol. 8, no. 48 (P-258)(1485) 03 mars 1984,<br>& JP-A-58 200159 (HITACHI SEISAKUSHO K.K.) 21 novembre 1983,<br>* le document en entier * | 1, 4 | |

DOMAINES TECHNIQUES
RECHERCHES (Int. Cl.5 )

G01H
G10K
G01N

Le présent rapport a été établi pour toutes les revendications

| Lieu de la recherche | Date d'achèvement de la recherche | Examinateur |
|---|---|---|
| LA HAYE | 29 MAI 1990 | SWARTJES H.M. |